# EUROPEAN PATENT SPECIFICATION

(11) **EP 4 410 675 B1**
(45) Date of publication and mention of the grant of the patent: **06.05.2026**
(21) Application number: 23154785.2
(22) Date of filing: 02.02.2023
(51) Int. Cl.: B64D 11/04

(54) **GALLEY SYSTEM**
BORDKÜCHENSYSTEM
SYSTÈME D'OFFICE

(43) Date of publication of application: 07.08.2024
(73) Proprietor: B/E Aerospace, Inc., Winston Salem, NC 27105 (US)
(72) Inventor: PEREZ, Louie Manarang, Tanauan (PH); ALBINA, John Ervin Epan, Santo Tomas (PH); MARGES, Marc Medina, Sto. Tomas (PH); PILLADO, Glenn Ugalde, Tanauan City (PH); MONGIS, John Oliver Falcutila, Tanauan (PH)
(74) Representative: Dehns

(56) References cited:
- DE-A1- 102019 121 933
- US-A1- 2013 256 479
- US-A1- 2019 210 730

## Description

### Technical Field

The present invention relates to a galley insert comprising a locking arrangement for an aircraft galley system, a locking system and a galley system.

### Background

Galley systems in aircraft include galley inserts (e.g. cooking appliances) which are removed from a galley for maintenance or replacement. During flight the galley insert is locked to the galley by locking arrangements. Existing locking arrangements can be unreliable, potentially leading to damage to the galley insert or injury to personnel in an aircraft cabin.
US 2019210730 A1 discloses a galley monument with electrical locking for an aircraft or spacecraft. The galley monument comprises multiple catches, each of which are coupled to an electromechanical actuator. The galley also comprises a component detector designed to detect a presence of a galley component in one or more associated compartments, and wired to a control unit. The control unit exchanges locking data with the actuators and the component detector and control the actuators on the basis of this.
DE 102019121933 A1 discloses a storage and removal system for containers in a vehicle and a vehicle with such a system.
US 2013256479 A1 discloses a galley insert mounting system.

### Summary

In accordance with a first aspect, there is provided a galley insert according to claim 1.

By having a controller which locks the galley insert to the galley assembly in response to the galley insert being received by the galley assembly, the galley insert is more reliably locked to the galley assembly and the possibility of human error in manually locking a galley insert to the galley assembly (e.g. due to a failure to lock the galley insert or due to damage being caused during manual locking) is reduced.

The sensor may comprise a first communicator configured to determine that the first communicator is within proximity of a second communicator to determine that the galley insert has been received by the galley assembly.

The first communicator may be a near-field communication communicator. The first communicator may be an active near-field communication communicator.

The second communicator may be a near-field communication communicator. The second communicator may be a passive near-field communication communicator.

The lock may comprise a pin, the pin movable into a locked position to lock the galley insert to the galley assembly. In the locking position the pin may be received in an aperture to lock the galley insert to the galley assembly.

The lock may comprise an actuator for moving the pin into the locked position. The actuator may be an electromagnetic actuator. The electromagnetic actuator may be a motor. The lock may comprise a gear device for converting rotational movement of the motor to linear movement of the pin.

The locking arrangement may comprise a user controllable element, the user controllable element actuatable to unlock the galley insert from the galley assembly. The user controllable element may be a button.

The controller may be configured to control the lock to unlock the galley insert from the galley assembly.

The actuator may be configured to move the pin from the locked position to an unlocked position to unlock the galley insert from the galley assembly.

The locking arrangement may be comprised in an insert unit, in turn comprised in the galley insert. The insert unit may comprise a first connector for connecting the insert unit to a galley insert.

The galley insert may be a cooking appliance. The cooking appliance may be a beverage maker. The beverage maker may be a coffee machine. The cooking appliance may be an oven e.g. a microwave oven.

In accordance with a second aspect, there is provided a locking system comprising the galley insert and further comprising the second communicator. The locking system of the second aspect may comprise any of the features of the first aspect.

The second communicator may be comprised in a galley unit. The galley unit may comprise a second connector for connecting the galley unit to the galley assembly.

In accordance with a third aspect, there is provided a galley system comprising the locking system and a galley assembly. The galley system of the third aspect may comprise any of the features of the first and second aspects.

The galley system may comprise an aperture of receiving a pin to lock the galley insert to the galley assembly.

The galley system may comprise a rail. The aperture may be formed in the rail.

In accordance with a fourth aspect defined in claim 14, there is provided a method of operation of the galley system, comprising sensing, at the sensor, that the egalley insert has been received by the galley assembly; and locking the galley insert to the galley assembly.

The method may comprise any of the features and/or functional steps described above with respect to the first to third aspects.

### Brief Description of the Drawings

Embodiments will now be described, by way of example only, with reference to the accompanying drawings in which:
Fig. 1 shows a perspective drawing of a galley system;
Fig. 2 shows a schematic of a locking system;
Fig. 3 shows a front drawing of a locking arrangement; and
Fig. 4 shows a method.

### Detailed Description

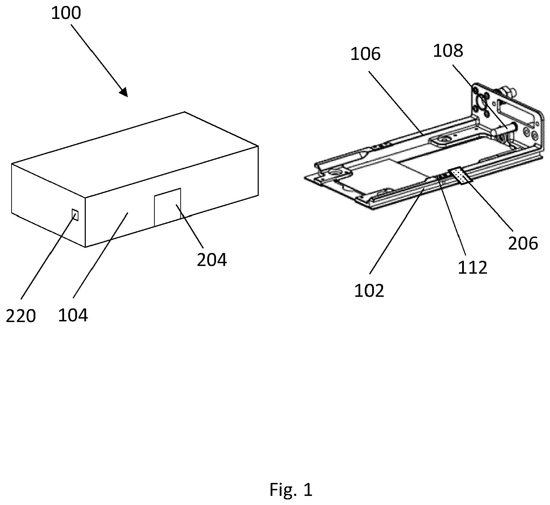

Referring to Fig. 1, there is a shown a galley system 100 for an aircraft. The galley system 100 comprises a galley assembly 102 and a galley insert 104. In the present example, the galley insert 104 is a cooking appliance. The galley insert 104 is a beverage maker e.g. a coffee maker. In other examples, the galley insert 104 is a different type of appliance. The galley insert 104 is not intended to be removed from the galley assembly 102 during flight, but may be removed, for example for servicing or replacement, when the aircraft is stationary.

The galley assembly 102 comprises rails 106 for receiving the galley insert 104 and maintaining the galley insert 104 in a fixed position relative to the aircraft during flight. The galley assembly 102 forms a part of a galley, including a frame defining a cavity (not shown) containing the rail system 106, with the galley insert 104 received in the cavity in use. When the galley insert 104 is received by the galley assembly 102, the galley insert 104 sits on top of the rails 106. The galley assembly 102 is configured to supply power to the galley insert 104 via connectors 108.

As described in more detail below, the galley system 100 comprises a locking system 200. The locking system 200 comprises a locking arrangement 202, mounted to the galley insert 104. In other examples, not within the scope of the claims, the locking arrangement 202 or some of its components may be mounted to other components of the galley system 100. In the present example the locking arrangement 202 is comprised in an insert unit 204. The insert unit 204 is mounted to a side of the galley insert 104.

The locking system 200 comprises further features in the galley assembly 102. These include features in a galley unit 206. In other examples the further features may be in other components of the galley system 100.

The galley assembly 102 further comprises a galley locking component 112 for locking the galley assembly 102 to the galley insert 104, as described below. In the present example the locking component 112 is an aperture 112 configured to receive a pin.

The locking component 112 is positioned on the galley assembly 102 such that it aligns with the insert unit 204 when the galley insert 104 is received by the galley assembly 102. The galley unit 206 is positioned on the galley assembly 102 such that it aligns with the insert unit 204 when the galley insert 104 is received by the galley assembly 102.

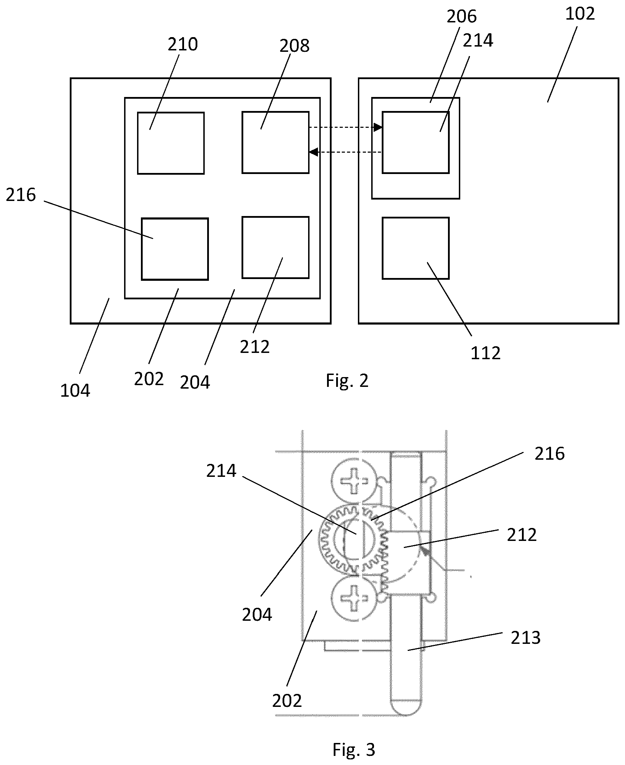

Fig. 2 shows the locking system 200. As described above, the locking system 200 comprises the locking arrangement 202, which is comprised in the insert unit 204 of the galley insert 104. The locking system 200 further comprises the galley unit 206 and the locking component 112 of the galley assembly 102.

The locking arrangement 202 comprises a sensor 208. The locking arrangement 202 comprises a controller 210. The locking arrangement 202 comprises a lock 212.

The locking system 200 comprises a user controllable element 220. The user controllable element 220 is a button. The user controllable element 220 is positioned on a front surface of the galley insert 104, such that the user controllable element 220 is accessible to a user when the galley insert 104 is received by the galley assembly 106.

The controller 210 is in data communication with the sensor 208, the lock 212 and the user controllable element 220.

In the present example the sensor 208 comprises a first communicator and the galley unit 206 comprises a second communicator 214. In other examples, the first communicator and the second communicator 214 may be reversed (i.e. with the first communicator on the galley and the second communicator on the galley insert). In this example, the first communicator is an active near field communication communicator. The second communicator is a passive near field communication communicator. The second communicator 214 is positioned on the galley assembly 102 such that it aligns with the first communicator when the galley insert 104 is received by the galley assembly 102

Fig. 3 shows the lock 212 of the insert unit 204 in more detail. The lock 212 comprises a pin 213. The lock 212 comprises an actuator 214. The actuator 214 is an electromagnetic actuator. The actuator 214 is a motor. The lock 212 comprises a gear device 216. The gear device 216 is configured to convert rotational movement from the actuator to linear movement of the pin 212.

The pin 212 is movable (in this example, by sliding) between locked position, in which the pin 212 is received by the aperture 112 to lock the galley insert 104 to the galley assembly 102, and an unlocked position, in which the pin 212 is not received by the aperture 112. In use, the pin 212 extends downwardly along the side of the galley insert 104.

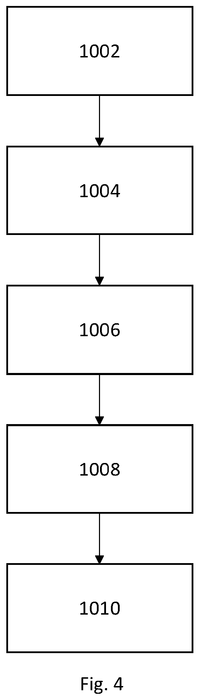

Fig. 4 shows a method 1000 of operation of the galley system 100. The method 1000 comprises a galley insert receiving step 1002, a sensing step 1004, a locking step 1006, a user control step 1008, an unlocking step 1010 and a galley insert removal step 1012.

In the galley insert receiving step 1002, the galley insert 104 is inserted into the galley assembly 102 by the user.

In the sensing step, when the galley insert 104 is received by the galley assembly 102, the first communicator 208 of the sensor 208 aligns with the second communicator 214 of the galley assembly 102, and the first communicator 208 transmits a first signal to the second communicator 214. The second communicator 214 receives the first signal. In response to receiving the first signal, the second communicator 214 transmits a second signal to the first communicator 208. The first communicator 208 receives the second signal. In response to the second signal being received, the sensor 208 transmits a galley insert received signal to the controller 210.

It will be understood that the first communicator 208 periodically transmits the first signal regardless of whether the galley insert 104 is received by the galley assembly 102. When the galley insert 104 is not received by the galley assembly 102, the first signal is not received by the second communicator 214 due to the second communicator 214 being too far from the first communicator 208. This means that the second communicator 214 does not transmit the second signal, and the second signal is not received by the first communicator 208. In the event that no second signal is received, the galley insert received signal is not transmitted to the controller 210.

In the locking step 1006, in response to receiving the galley insert received signal, the controller 210 controls the lock to lock the galley insert 104 to the galley assembly 102. In order to control the lock to lock the galley insert 104 to the galley assembly 102, the controller 210 sends a signal to the actuator 214 to cause the actuator 214 to move the pin 212 to the locked position. The actuator 214 rotates, with the gear device 216 in turn rotating to cause the pin 212 to slide from the unlocked position to the locked position. The pin 212 is received by the aperture 112, with the pin 212 and the aperture together locking the galley insert 104 to the galley assembly 102. In use the galley insert 104 may remain locked to the galley assembly 102 for the entirety of the aircraft's flight and in some examples for a plurality of flights.

In the user control step 1008, the user actuates the user controllable element 220 (e.g. by pressing the button). The user controllable element 220 sends an unlock signal to the controller 210.

In the unlocking step 1010, in response to receiving the unlock signal, the controller 210 controls the lock to unlock the galley insert 104 from the galley assembly 102. In order to control the lock to unlock the galley insert 104 from the galley assembly 102, the controller 210 sends a signal to the actuator 214 to cause the actuator 214 to move the pin 212 to the unlocked position. The actuator 214 rotates, with the gear device 216 in turn rotating to cause the pin 212 to slide from the locked position to the unlocked position. The pin 212 is not received by the aperture 112. The galley insert 104 may then be removed from the galley assembly 102, for example for maintenance or replacement when the aircraft is not in flight.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims, and that other embodiments may be utilised and modifications may be made without departing from the scope of the claimed invention. Various embodiments of the invention may suitably comprise, consist of, or consist essentially of, appropriate combinations of the disclosed elements, components, features, parts, steps, means, etc, other than those specifically described herein, to the extent that they fall within the scope of the claims.

## Claims

1. A galley insert (104) comprising a locking arrangement (202) for an aircraft galley system (100), the locking arrangement (202) comprising a sensor (208) and a controller (210), wherein the sensor (208) is configured to determine when the galley insert (104) has been received by a galley assembly (102) and the controller (210) is configured to control a lock (212) to lock the galley insert (104) to the galley assembly (102) in response to the galley insert (104) being received by the galley assembly (102).

2. A galley insert according to claim 1, wherein the sensor (208) comprises a first communicator (208) configured to determine that the first communicator (208) is within proximity of a second communicator (214) to determine that the galley insert (104) has been received by the galley assembly (102).

3. A galley insert (104) according to claim 2, wherein the first communicator (208) is a near-field communicator.

4. A galley insert (104) according to any of claims 1 to 3 and comprising the lock (212).

5. A galley insert (104) according claim 4, wherein the lock (212) comprises a pin (213), the pin (213) movable into a locked position wherein the pin (213) is received in an aperture (112) of the galley assembly (102) to lock the galley insert (104) to the galley assembly (102).

6. A galley insert (104) according to claim 5, wherein the lock (212) comprises an actuator (214) for moving the pin (213) into the locked position.

7. A galley insert (104) according to any of claims 1 to 6, wherein the locking arrangement (202) comprises a user controllable element (220), the user controllable element (220) actuatable to unlock the galley insert (104) from the galley assembly (102).

8. A galley insert (104) according to any of claims 1 to 7 and comprising an insert unit (204), wherein the locking arrangement is comprised in the insert unit (204).

9. A galley insert (104) according any preceding claim, wherein the galley insert (104) is a cooking appliance.

10. A locking system (200) comprising the galley insert (104) of any preceding claim and further comprising the second communicator (214) of claim 2.

11. A locking system (200) according to claim 10, wherein the second communicator (214) is comprised in a galley unit (206).

12. A galley system (100) comprising a galley assembly (102) and the locking system (200) according to claim 10 or 11.

13. A galley system (100) according to claim 12 and comprising an aperture (112) for receiving a pin (213) to lock the galley insert (104) to the galley assembly (102).

14. A method of operation of the galley system of claim 12 or 13, comprising:
sensing, at the sensor (208), that the egalley insert (104) has been received by the galley assembly (102); and
locking the galley insert (104) to the galley assembly (102).

## Patentansprüche

1. Bordkücheneinsatz (104), umfassend eine Verriegelungsanordnung (202) für ein Bordküchensystem (100) eines Luftfahrzeugs, wobei die Verriegelungsanordnung (202) einen Sensor (208) und eine Steuerung (210) umfasst, wobei der Sensor (208) zum Bestimmen konfiguriert ist, wann der Bordkücheneinsatz (104) von einer Bordküchenbaugruppe (102) aufgenommen wurde, und die Steuereinheit (210) zum Steuern einer Verriegelung (212) zum Verriegeln des Bordkücheneinsatzes (104) mit der Bordküchenbaugruppe (102) als Reaktion auf das Aufnehmen des Bordkücheneinsatzes (104) durch die Bordküchenbaugruppe (102) konfiguriert ist.

2. Bordkücheneinsatz nach Anspruch 1, wobei der Sensor (208) einen ersten Kommunikator (208) umfasst, der zum Bestimmen konfiguriert ist, dass sich der erste Kommunikator (208) in der Nähe eines zweiten Kommunikators (214) befindet, um zu bestimmen, dass der Bordkücheneinsatz (104) durch die Bordküchenbaugruppe (102) aufgenommen wurde.

3. Bordkücheneinsatz (104) nach Anspruch 2, wobei der erste Kommunikator (208) ein Nahfeldkommunikator ist.

4. Bordkücheneinsatz (104) nach einem der Ansprüche 1 bis 3 und umfassend die Verriegelung (212).

5. Bordkücheneinsatz (104) nach Anspruch 4, wobei die Verriegelung (212) einen Stift (213) umfasst, wobei der Stift (213) in eine verriegelte Position bewegbar ist, wobei der Stift (213) in einer Öffnung (112) der Bordküchenbaugruppe (102) aufgenommen wird, um den Bordkücheneinsatz (104) mit der Bordküchenbaugruppe (102) zu verriegeln.

6. Bordkücheneinsatz (104) nach Anspruch 5, wobei die Verriegelung (212) einen Aktor (214) zum Bewegen des Stifts (213) in die verriegelte Position umfasst.

7. Bordkücheneinsatz (104) nach einem der Ansprüche 1 bis 6, wobei die Verriegelungsanordnung (202) ein von benutzersteuerbares Element (220) umfasst, wobei das benutzersteuerbare Element (220) zum Entriegeln des Bordkücheneinsatzes (104) von der Bordküchenbaugruppe (102) betätigbar ist.

8. Bordkücheneinsatz (104) nach einem der Ansprüche 1 bis 7 und umfassend eine Einsatzeinheit (204), wobei die Verriegelungsanordnung in der Einsatzeinheit (204) umfasst ist.

9. Bordkücheneinsatz (104) nach einem der vorhergehenden Ansprüche, wobei der Bordkücheneinsatz (104) ein Kochgerät ist.

10. Verriegelungssystem (200), umfassend den Bordkücheneinsatz (104) nach einem der vorhergehenden Ansprüche und ferner umfassend den zweiten Kommunikator (214) nach Anspruch 2.

11. Verriegelungssystem (200) nach Anspruch 10, wobei der zweite Kommunikator (214) in einer Bordkücheneinheit (206) umfasst ist.

12. Bordküchensystem (100), umfassend eine Bordküchenbaugruppe (102) und das Verriegelungssystem (200) nach Anspruch 10 oder 11.

13. Bordküchensystem (100) nach Anspruch 12 und umfassend eine Öffnung (112) zum Aufnehmen eines Stifts (213) zum Verriegeln des Bordkücheneinsatzes (104) mit der Bordküchenbaugruppe (102).

14. Verfahren zum Betreiben des Bordküchensystems nach Anspruch 12 oder 13, umfassend:
Erfassen an dem Sensor (208), dass der Bordkücheneinsatz (104) durch die Bordküchenbaugruppe (102) aufgenommen wurde; und
Verriegeln des Bordkücheneinsatzes (104) mit der Bordküchenbaugruppe (102).

## Revendications

1. Garniture d'office (104) comprenant un agencement de verrouillage (202) pour un système d'office d'aéronef (100), l'agencement de verrouillage (202) comprenant un capteur (208) et un dispositif de commande (210), dans lequel le capteur (208) est configuré pour déterminer quand la garniture d'office (104) a été reçue par un ensemble d'office (102) et le dispositif de commande (210) est configuré pour commander à un verrou (212) de verrouiller la garniture d'office (104) à l'ensemble d'office (102) en réponse à la réception de la garniture d'office (104) par l'ensemble d'office (102).

2. Garniture d'office selon la revendication 1, dans laquelle le capteur (208) comprend un premier transmetteur (208) configuré pour déterminer que le premier transmetteur (208) se trouve à proximité d'un second transmetteur (214) pour déterminer que la garniture d'office (104) a été reçue par l'ensemble d'office (102).

3. Garniture d'office (104) selon la revendication 2, dans laquelle le premier transmetteur (208) est un transmetteur en champ proche.

4. Garniture d'office (104) selon l'une quelconque des revendications 1 à 3 et comprenant le verrou (212).

5. Garniture d'office (104) selon la revendication 4, dans laquelle le verrou (212) comprend une tige (213), la tige (213) étant mobile dans une position verrouillée dans laquelle la tige (213) est reçue dans une ouverture (112) de l'ensemble d'office (102) pour verrouiller la garniture d'office (104) à l'ensemble d'office (102).

6. Garniture d'office (104) selon la revendication 5, dans laquelle le verrou (212) comprend un actionneur (214) pour déplacer la tige (213) dans la position verrouillée.

7. Garniture d'office (104) selon l'une quelconque des revendications 1 à 6, dans laquelle l'agencement de verrouillage (202) comprend un élément pouvant être commandé par l'utilisateur (220), l'élément pouvant être commandé par l'utilisateur (220) pouvant être actionné pour déverrouiller la garnicure d'office (104) de l'ensemble d'office (102).

8. Garniture d'office (104) selon l'une quelconque des revendications 1 à 7 et comprenant une unité de garniture (204), dans laquelle l'agencement de verrouillage est compris dans l'unité de garniture (204).

9. Garniture d'office (104) selon une quelconque revendication précédente, dans laquelle la garniture d'office (104) est un appareil de cuisson.

10. Système de verrouillage (200) comprenant la garniture d'office (104) selon une quelconque revendication précédente et comprenant en outre le second transmetteur (214) selon la revendication 2.

11. Système de verrouillage (200) selon la revendication 10, dans lequel le second transmetteur (214) est compris dans une unité d'office (206).

12. Système d'office (100) comprenant un ensemble d'office (102) et le système de verrouillage (200) selon la revendication 10 ou 11.

13. Système d'office (100) selon la revendication 12 et comprenant une ouverture (112) pour recevoir une tige (213) afin de verrouiller la garniture d'office (104) à l'ensemble d'office (102).

14. Procédé de fonctionnement du système d'office selon la revendication 12 ou 13, comprenant :
la détection, au niveau du capteur (208), que la garniture d'office (104) a été reçue par l'ensemble d'office (102) ; et
le verrouillage de la garniture d'office (104) à l'ensemble d'office (102).
